# EUROPÄISCHE PATENTSCHRIFT

(11) **EP 3 345 809 B1**
(45) Veröffentlichungstag und Bekanntmachung des Hinweises auf die Patenterteilung: **01.04.2020**
(21) Anmeldenummer: 17460011.4
(22) Anmeldetag: 19.03.2017
(51) Int. Cl.: B62D 33/02, B62D 33/04

(54) **MITTELRUNGE FÜR SATTELAUFLIEGER**
MIDDLE STANCHION FOR SEMITRAILERS
PILIER CENTRAL POUR SYSTÈME DE SUPPORT DE SELLE

(30) Priorität: 09.01.2017 PL 42013217
(43) Veröffentlichungstag der Anmeldung: 11.07.2018
(73) Patentinhaber: "WIELTON" Spolka Akcyjna, 98-300 Wielun (PL)
(72) Erfinder: Krawczyk, Przemyslaw, 98-200 Sieradz (PL)
(74) Vertreter: AOMB Polska Sp. z.o.o.

(56) Entgegenhaltungen:
- EP-A2- 1 955 932
- DE-A1- 2 247 678
- DE-A1- 3 538 076
- DE-U1-202016 000 463

## Beschreibung

Der Gegenstand der Erfindung ist eine Mittelrunge für Sattelauflieger, die schnell abnehmbar und vor allem für verschiedenartige Sattelauflieger und Anhänger bestimmt ist, insbesondere für landwirtschaftliche, universelle oder sogar Unter-Container-Sattelauflieger.

DE 20 2016 000463 U1, die als nächstliegender Stand der Technik angesehen wird, offenbart eine Mittelrunge für einen Sattelauflieger, die in einer an einer Bordwand ausgeführten Tasche platzierbar ist, wobei sich im unteren Teil der Mittelrunge ein Sicherheitsschloss befindet, das aus einem unteren Hebel und einem Arm besteht.

DE2247678A1 offenbart eine Vorrichtung zur Bordwandverriegelung bei kippbaren Ladebrücken mit einer wahlweise um eine obere oder untere Achse schwenkbaren und aus ihren unteren oder oberen Lagerstellen lösbaren Rückwand. Die Vorrichtung gewährleistet, dass das Bedienungspersonal immer die Entriegelungsautomatik für die unteren Lagerstellen der Rückwand beim Kippen der Ladebrücke ausschaltet, bevor es die Handhebel zum Lösen der Rückwand aus ihren oberen Lagerstellen betätigt. Dazu ist ein Gestänge mit den unteren Verriegelungshaken über einen herausziehbaren Steckbolzen gekuppelt und einer der Handhebel in der Verriegelungsstellung durch ein Schloss gesichert, für das der Steckbolzen als Schlüssel dient. Wenn das Bedienungspersonal den einen Handhebel zum Lösen der Ladebrücke aus der betreffenden oberen Lagerstelle betätigen will, so muss es zunächst das Schloss öffnen, und das kann nur mit dem als Schlüssel dienenden Steckbolzen gemacht werden.Es gibt viele unterschiedliche Konstruktionslösungen von Mittelrungen für Sattelauflieger. Aus der polnischen Beschreibung der Erfindung Nr. P-329446 (Veröffentlichungsdatum im ABI. 1999-11-22) ist eine Lösung bekannt "Schwenkstütze für Bordwände an LKWs". Die besonders an Fahrzeugen und Sattelaufliegern mit Planen verwendete Schwenkstütze besitzt ein Gehäuse, das aus einem U-Profil und einem Flacheisen besteht, die fest gebunden sind und ein geschlossenes Rechteckprofil bilden. Im Inneren des Gehäuses ist eine Verriegelungseinrichtung angeordnet, derer Verriegelungshebel dreh- und schwenkbar in Längslöchern eingesetzt ist. In der Hebel gibt es gelenkartig eingesetzte Zugstangen, von denen beide mit zwei getrennten Keilen mit Hilfe von einem Schieber und einem Bolzen verbunden sind, wobei an dem Bolzen eine Feder zwischen dem Schieber und der zum Bolzen gehörenden Stütze angebracht ist.

Aus der polnischen Beschreibung des Gebrauchsmusters Nr. W-120762 (Veröffentlichungsdatum im ABI. 2013-08-19) ist weiter eine Lösung "Mittelpfosten für Sattelauflieger" bekannt. Der dort dargestellte Mittelpfosten für Sattelauflieger, der lösbar mit konturiertem Ende in der fest an Fahrgestell-Wand angebrachten Tasche eingesetzt ist, besteht aus einem Verriegelungsschloss, das einen aufklappbaren Hebel besitzt, der durch ein Exzentergelenk und eine Zugstange mit gleitendem, koaxialem Verriegelungskeil mit der Öffnung des in der Tasche lokalisierten Widerstandsbügels verbunden ist. Der Schließhebel besitzt außerdem einen über dessen Drehachse verlängerten, zusätzlichen Arm, der durch ein Gelenk und einen Schieber mit gleitendem, entlang den Pfosten angeordnetem Blockierungs-Gabelkeil verbunden ist, in der Spitze der Bolzenstütze, die mit einem Querstück die gegenüberliegenden Wände des Sattelaufliegers zusammenklammert.

Aus der weiteren polnischen Beschreibung der Erfindung Nr. P-410869 (Veröffentlichungsdatum im ABI. 2016-07-04) ist eine Lösung "Stützpfosten für einen Anlieger" bekannt. Die Erfindung beschreibt die Montage und Demontage von einem Pfosten für Sattelauflieger auf unkonventionelle Weise. Die drehbare Stütze, die eine zusätzliche Abstützung für den Pfosten bildet, ist am Befestigungselement [Spannelement] angebracht und in der eingeklappten und neutralen Position parallel zur Unterkante des Sattelaufliegers und ragt über die Fahrzeugaußenfläche nicht hervor. Dabei ist sie drehbar im Drehmechanismus montiert, das im Befestigungselement platziert ist. Über dem Befestigungselement befindet sich ein Schloss, das den Pfosten in der neutralen und eingeklappten Position sichert und verriegelt. Das Schloss ist fest am Seitenrand des Sattelaufliegers angebracht. An dem anderen Ende der drehbaren Stütze ist ein Befestigungselement eingebaut. Die Abstützung des Pfostens erfordert die Herausziehung des Pfostens aus dem Schloss, Entriegelung der Stütze und Aufstützung des Pfostens darauf. Um dieses Ziel zu erreichen, muss man das Blockierelement entsperren und lockern, anschließend die drehbare Stütze um die Achse, die den Drehmechanismus bildet, drehen und den Pfosten an dem - zum Befestigungselement entgegengesetzten - Ende abstützen. Dabei ermöglicht der Federmechanismus die Drehung der beweglichen Stütze um 90° und deren Blockierung in äußersten Punkten dh. in der Ausgangs- und Ausklappposition.

Aus der weiteren polnischen Beschreibung der Erfindung Nr. P-338535 (Veröffentlichungsdatum im ABI. 2009-04-30) ist eine Lösung "Kugelkupplung für einen Anlieger" bekannt. Der Gegenstand der Erfindung ist eine Kugelkupplung für einen Anlieger mit einer durch den in Form von einem leeren Element gestalteten Griff betätigten Kugelpfanne, verbunden mit - einer am Fahrzeug angebrachten Kugel, die mit Sicherheitsteil handbetätigt wird, mit dessen Hilfe in einer geschlossenen Position der Kugelpfanne die Neigung des Griffes gesperrt wird - und mit einer, in der Betriebsstellung senkrecht in Richtung der Neigung des Griffes platzierten und dadurch verlaufenden, bolzenartigen Schließvorrichtung, dadurch gekennzeichnet, dass die Schließvorrichtung spaltenfrei oder fast spaltenfrei an die zur Pfanne gerichtete, kugelförmige Stirnfläche oder an gegenüberliegende Innenwand des Griffes angrenzt.

Das Ziel der Erfindung ist so eine Mittelrunge für Sattelauflieger zu schaffen, den man schnell montieren und demontieren kann - bedeutend schneller, wie das bei bisherigen Konstruktionen der Fall ist, so ist im Endergebnis die Montage und Demontage einer solchen Mittelrunge auch dank dem einfach und fließend wirkenden Hebelsystem leichter.

Das Wesentliche der Mittelrunge für Sattelauflieger ist, dass die Mittelrunge in einer an einer Bordwand ausgeführten Tasche platzierbar ist, wobei im unteren Teil der Mittelrunge ein Sicherheitsschloss angebracht ist, das aus einem unteren Hebel, einem Arm und einem an dem Stift verriegelbaren Sicherungshaken-Modul besteht. Der Arm ist gelenkartig an dem Haken-Modul befestigt - so dass auf diese Weise eine Drehbewegung des Haken-Moduls möglich ist. Auf der anderen Seite zur modularen Hakenbefestigung - ist der Arm drehbar an dem unteren Hebel angebracht. Der untere Hebel ist an der Mittelrunge mittels einem Bolzen befestigt, der die Drehachse des Hebels bestimmt, so ist dadurch die Achse gegenüber der Befestigung des Armes zum Hebel verschoben. Nach Inbetriebsetzung und Hochheben des unteren Hebels führt dieser eine Schwingbewegung nach einem Teilkreis aus, dessen Mitte durch die Drehachse des unteren Hebels, also den Bolzen bestimmt ist. Die Drehachse des in Schwingbewegung versetzten Armes befindet sich in einer Öffnung, an der Stelle der Verbindung des Armes und Haken-Moduls. Das Sicherungsschloss wird insgesamt gebildet von: dem Haken-Modul, dem Arm und dem unteren Hebel, also dem Exzentermechanismus.

Vorzugsweise ist die Länge des Armes verstellbar.

Vorzugsweise bildet das Haken-Modul eine entsprechend geformte, abgerundete Flachstange, die zwei abgerundete Abzweigungen aufweist, und in deren Mitte sich die Öffnung und eine Durchbohrung befinden.

Vorzugsweise befindet sich die Durchbohrung an der Stelle, wo das Haken-Modul mit der Mittelrunge verbunden ist, auch mittels einem senkrecht platziertem Bolzen [Stift] realisiert.

Vorzugsweise bildet eine der Abzweigungen der Flachstange, also des Haken-Moduls einen Halter.

Vorzugsweise befindet sich die Drehachse des Haken-Moduls genau in der Mitte der Durchbohrung.

Vorzugsweise gibt es an der Mittelrunge mehr als ein Sicherheitsschloss, Vorzugsweise gibt es zwei Sicherheitsschlösser.

Vorzugsweise, ist an der Mittelrunge, in dessen oberen Teil, ein Heber befestigt, an dem gelenkartig eine Stange angebracht ist. Dabei ist die Verbindung des Hebers mit der Mittelrunge und mit der Stange getrennt, und die Stange verfügt über einen Riegel, der das obere Teil der Mittelrunge blockiert und über den Dachbinder des Sattelanliegers geschoben wird. In der Lage, wo sich der Heber senkrecht zur Mittelrunge befindet - ist das obere Teil des Mittelrunge ungesichert und entriegelt.

Vorzugsweise ist die Stange in der Länge verstellbar.

Erfindungsgemäß ermöglicht diese Lösung effiziente Montage und Demontage des Mittelrunge für einen Auflieger, der die Tragfähigkeit der Aufliegerwand während des Transports verbessert. Dadurch ist das Be- und Entladen von Fracht noch effizienter, weil der Öffnungsdurchmesser in der aufgemachten Auflieger- oder Anhängerwand erweitert wird.

Der Vorteil der Lösung ist laut Erfindung der besonders einfache Sicherungsmechanismus, das trotz der Tatsache, dass er die Entriegelung des schnell abnehmbaren Mittelrungen für Sattelauflieger ermöglicht, von einem Nutzer, verhindert aber das Aufsperren der Mitteldorne für Sattelauflieger beim Transport.

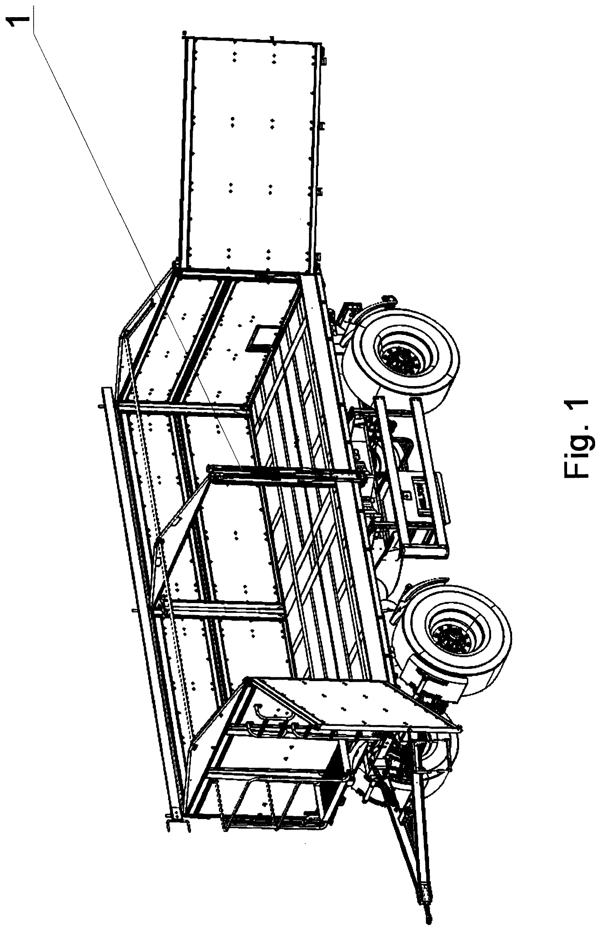

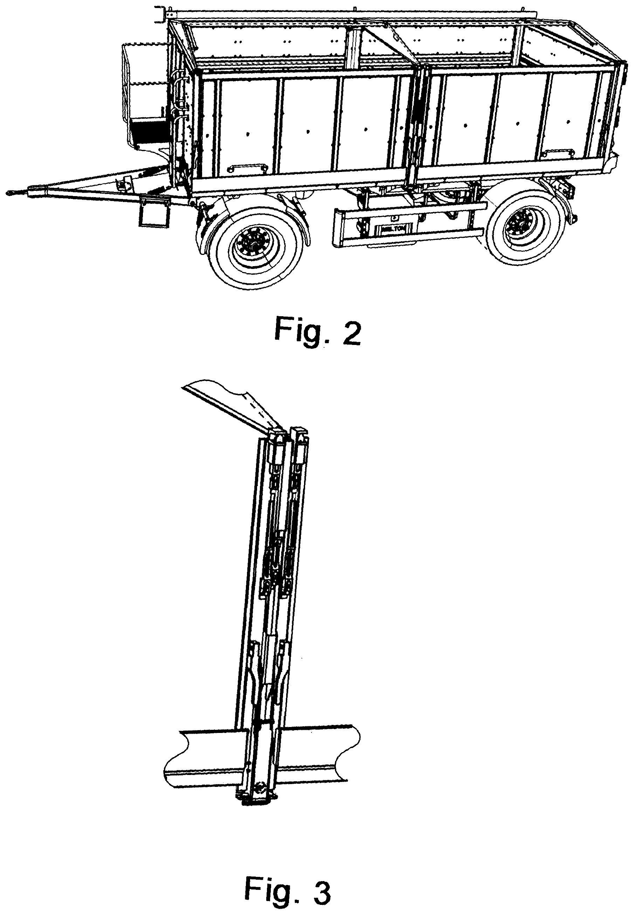

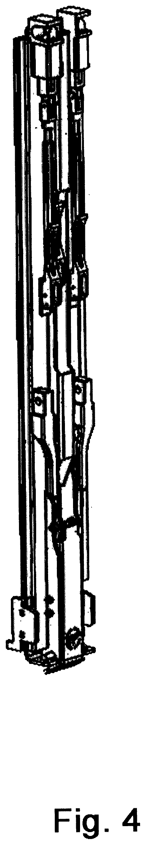

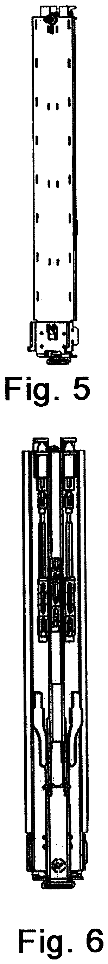

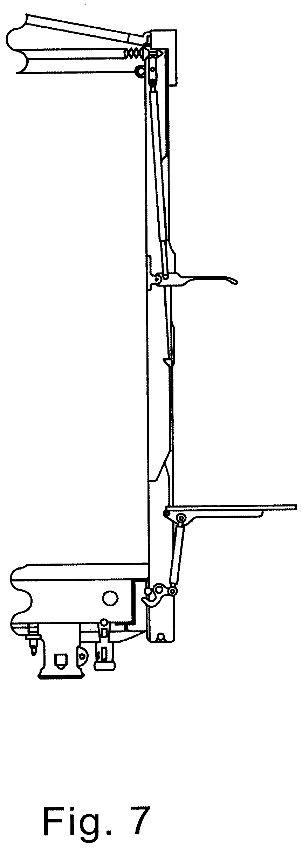

Der Gegenstand der Erfindung wurde näher am Ausführungsbeispiel in den Zeichnungen erläutert, in denen dargestellt wurden: Fig. 1 - axonometrische Ansicht des geöffneten Sattelaufliegers mit eingebauter Mittelrunge für Sattelauflieger, Fig.2 - perspektivische Ansicht des geschlossenen Sattelaufliegers mit eingebauter Mittelrungen für Sattelauflieger, Fig. 3 - der in der Bordwand-Tasche platzierte und an Dachbinder des Sattelaufliegers angebrachte Mittelrunge für Sattelauflieger, Fig. 4 - Mittelrunge für Sattelauflieger in axonometrischer Ansicht von außen, Fig. 5 - Mittelrunge für Sattelauflieger in axonometrischer Ansicht von innen, Fig.6 - Mittelrunge für Sattelauflieger in Vorderansicht, Fig. 7 - Durchschnitt durch den Sattelauflieger mit eingebautem und entriegeltem Mittelrunge für Sattelanhänger, Fig. 8 - Durchschnitt durch den Sattelauflieger mit eingebauter und verriegelter Mittelrunge für Sattelauflieger, Fig.9 - Arretierungsmechanismus der Mittelrunge in geöffneter Position von nah, Fig. 10 dagegen - Mechanismus des oberen Teils von der Mittelrunge.

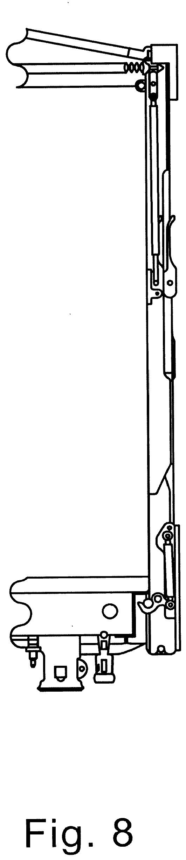

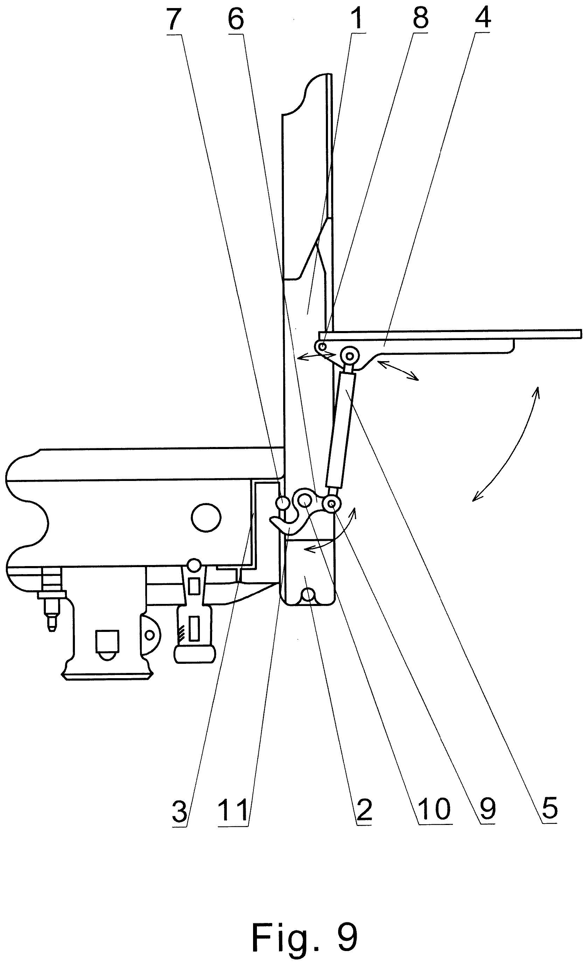

Was mit Zeichnungen veranschaulicht wurde, befindet sich die Mittelrunge 1 in der früher vorbereiteten Tasche 2, die in dem entsprechenden Bordtyp 3 des Sattelaufliegers ausgeführt wird. Das untere Teil des in der Tasche 2 platzierten Mittelrunge 1 besitzt ein Sicherheitsschloss, das aus unterem Hebel 4, verstellbarem Arm 5, Haken-Modul 6 für Sicherheitszwecken und einem Stift 7 besteht. Das Haken-Modul 6 für Sicherheitszwecken (in den Fig. 8 und Fig. 9 dargestellt) - ist am Stift 7 verriegelt, und schützt auf diese Weise den Mittelrunge 1 vor dem Herausfallen aus der Tasche 2. Am Haken-Modul 6 ist gelenkartig Arm 5 so angebracht, dass Drehbewegungen des Haken-Moduls 6 möglich sind. Der Arm 5 ist vorzugsweise so verstellbar, dass man seine Länge an verschiedenen Typen und Größen von Sattelaufliegern anpassen kann. Der Arm 5, auf der anderen Seite zur modularen Hakenbefestigung 6, ist drehbar an den unteren Hebel 4 angebracht.

In der abgesicherten Lage der Mittelrunge 1 ist der untere Hebel 4 nach unten gerichtet, parallel zur Mittelrunge 1. Der untere Hebel 4 ist an der Mittelrunge 1 mittels Bolzen 8 befestigt, der die Drehachse des Hebels 4 bestimmt. Auf diese Weise ist die Drehachse des unteren Hebels 4 gegenüber der Befestigung des Armes 5 verschoben und befindet sich an der Stelle des Bolzens 8. So eine Konstruktion verursacht, dass nach Inbetriebnahme des Mechanismus und beim Hochheben des unteren Hebels 4 führt er Schwenkbewegung im Kreisausschnitt aus, dessen Mittelpunkt durch die Drehachse des unteren Hebels 4, also den Bolzen 8 bestimmt wird. Auf diese Weise betätigter Arm 5 führt auch Schwenkbewegung aus - in diesem Fall in wesentlich kleinerem Kreisausschnitt, dessen Mittelpunkt sich in der Öffnung 9 befindet, dh. an der Verbindung des Armes 5 mit dem Haken-Modul 6. Diese Stelle bildet eine Drehachse für den Arm 5. Die Öffnung 9, also Verbindungstelle des Armes 5 mit dem Haken-Modul 6, bewegt sich entsprechend bei Inbetriebnahme des Mechanismus.

Die Betätigung des unteren Hebels 4 samt dem Arm 5 verursacht die Bewegung des speziell konstruierten Haken-Moduls 6.

Das Haken-Modul 6 ist eine entsprechend geformte, abgerundete Flachstange, die zwei abgerundete Abzweigungen aufweist, und in deren Mitte befinden sich: Öffnung 9 und Durchbohrung 10. Die Funktion der Öffnung 9 wurde oben beschrieben.

Die Durchbohrung 10 bildet dagegen eine Verbindungsstelle für das Haken-Modul 6 mit dem Mittelrunge 1, auch mittels einem senkrecht platziertem Bolzen realisiert.

Eine der Abzweigungen der Flachstange, also des Haken-Moduls 6 bildet den Halter 11.

Die Öffnung 9 ermöglicht gelenkartige Verbindung des Armes 5 mit dem Haken-Modul 6.

Beschriebene Ausgestaltung des Haken-Moduls 6 erlaubt Drehbewegung genauer gesagt Schwenkbewegung auszuführen.

Die Drehachse des Haken-Moduls 6 befindet sich genau in der Mitte der Durchbohrung 10. Das Haken-Modul 6, der Arm 6 und der untere Hebel 4 - die das Exzentermechanismus formen - bilden also ein Sicherheitsschloss.

Während der Bewegung [Wagenverkehrs] des Haken-Moduls 6, schiebt sich der Halter 9 direkt auf den - parallel zur Bordwand 3 des Sattelaufliegers und senkrecht zur Flachstange, die das Haken-Modul 6 bildet, angebrachten - Schutzstift 7 und hakt ihn an, oder tritt daraus hervor, wodurch die Mittelrunge 1 in der Tasche 2 der Bordwand 3 des Sattelaufliegers verriegelt oder entriegelt wird. An dem Mittelrunge 1 befinden sich vorzugsweise zwei solche nebeneinander angebrachte Sicherheitsschlösser. Der Exzentermechanismus mit dem Haken-Modul 6 ist so konstruiert, dass es bei Verriegelung oder Entriegelung des Schlosses vom Sattelauflieger zum Sprung über den Totpunkt kommt. Zu diesem Sprung kommt es im Moment, wenn alle drei Verbindungen dh.: die Verbindung des unteren Hebels 4 mit dem Arm 5, die Verbindung des Armes 5 mit dem Haken-Modul 6 mittels Öffnung 9 und die Verbindung des unteren Hebels 4 mit der Mittelrunge 1 - auf einer Linie liegen (grundsätzlich parallelen zu dem senkrechten Mittelrunge 1). Dieser Sprung schützt das Schloss des Sattelaufliegers vor Selbstentriegelung beim Transport.

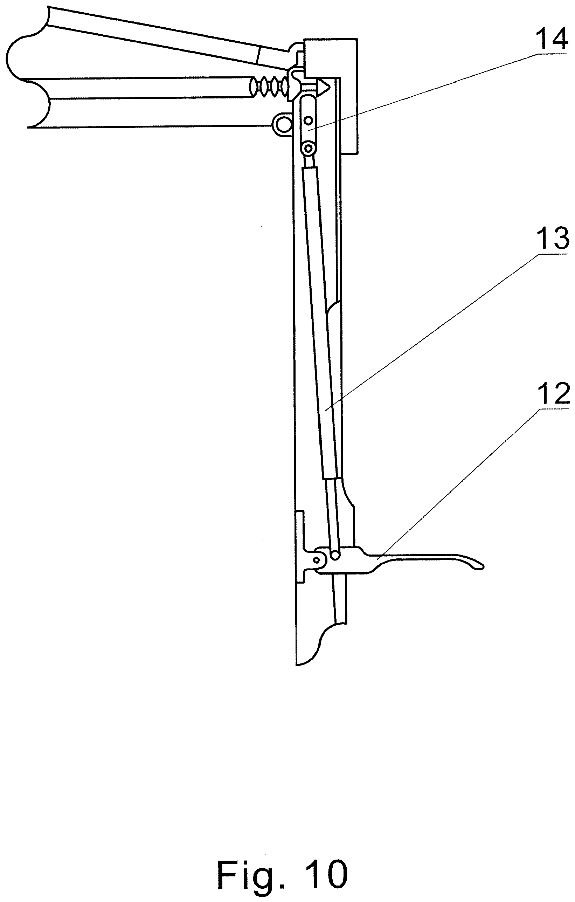

In dieser Lösung wurde erfindungsgemäß noch ein anderer Sicherheitsmechanismus für die Mittelrunge 1 vorgesehen, der sich in dessen oberen Teil befindet, also an der Stelle der Verbindung der Mittelrunge 1 mit dem Dachbinder des Sattelaufliegers (Fig.10).

An der Mittelrunge 1, in dessen oberen Teil, wird der Heber 12 montiert, zu dem man auch gelenkartig die Stange 13 angebracht hat, die in der Länge - ebenso wie bei dem Arm 5 der Fall ist - verstellbar ist, damit man sie verschiedenen Typen von Anhängern und Sattelanliegern anpassen konnte. So ist die Verbindung des Hebers 12 mit der Mittelrunge 1 und mit der Stange 13 getrennt, nicht überschneidend, exzentrisch. Die Stange 13 weist einen Riegel 14 auf, der den oberen Teil der Mittelrunge 1 blockiert und der über den Dachbinder geschoben wird.

Bildet der Heber 12 einen rechten Winkel zwischen den Mittelrungen 1, dann ist der obere Teil der Mittelrunge 1 ungesichert und entriegelt. Um den Mechanismus zu verriegeln, soll man den Heber 12 nach unten ziehen, da führt er eine Bewegung im Kreisausschnitt aus, was solch eine Bewegung der Stange 13 bewirkt, dass sie den Riegel 14 nach oben schiebt und auf diese Weise den Mittelrungen vor Entriegelung schützt. In dieser Lage, siehe Fig. 8 - liegt der Heber 12 parallel zur Mittelrungen 1. Man muss umgekehrt handeln, wenn man die Mittelrunge 1 entriegeln will, der gewöhnlich mit zwei solchen Mechanismen ausgestattet ist. (ebenso wie bei zwei Sicherheitsschlösser in dem unteren Teil).

Das bedeutet, dass alle vier Mechanismen verriegelt oder entriegelt werden müssen, damit die Wirkung erfindungsgemäß erfolgreich ist. So, bei der Demontage die Mittelrunge 1 muss man sich vergewissern, dass beide: der untere Hebel 4 und der obere Heber 12 mit der Mittelrunge 1 einen rechten Winkel bilden. Solche Anordnung von Elementen ermöglicht leichte und effiziente Demontage der Mittelrunge 1 und Erweiterung der Öffnung des Sattelaufliegers, was besonders bei landwirtschaftlichen Anliegern von Vorteil ist.

Und umgekehrt, die Mittelrunge 1 wird nur dann in der Tasche 3 der Bordwand 3 des Sattelaufliegers gut verankert, wenn beide: der untere Hebel 4 und der obere Heber 12 parallel zur Mittelrunge 1 sind. Nur solche Lage ermöglicht zweckentsprechende Nutzung des Mittelrunge 1 und dessen, sichere Befestigung am Sattelauflieger, besonders für landwirtschaftliche Zwecke.

### Verzeichnis der Bauteile:

1. Mittelrunge;
2. Tasche;
3. Bordwand;
4. Unterer Hebel;
5. Arm;
6. Haken-Modul;
7. Stift (Schutzstift);
8. Bolzen;
9. Öffnung;
10. Durchbohrung;
11. Halter;
12. Heber;
13. Stange;
14. Riegel.

## Patentansprüche

1. Eine Mittelrunge für einen Sattelauflieger, die in einer an einer Bordwand (3) ausgeführten Tasche (2) platzierbar ist, wobei sich im unteren Teil der Mittelrunge (1) ein Sicherheitsschloss befindet, das aus einem unteren Hebel (4) und einem Arm (5) besteht, **dadurch gekennzeichnet, dass** einem an einem Stift (7) verriegelbaren Sicherungshaken-Modul (6) aufweist, wobei der Arm (5) an dem Haken-Modul (6) gelenkartig befestigt ist - so, dass auf diese Weise eine Drehbewegung des Haken-Moduls (6) möglich ist, und auf der anderen Seite zur modularen Hakenbefestigung (6) ist der Arm (5) drehbar an dem unteren Hebel (4) angebracht, und der untere Hebel (4) ist an der Mittelrunge (1) mit Hilfe von einem Bolzen (8) befestigt, der die Drehachse des Hebels (4) bestimmt, dadurch wird die Achse gegenüber der Befestigung des Armes (5) zum Hebel (4) verschoben, wobei nach Inbetriebsetzung und Hochheben des unteren Hebels (4) führt dieser eine Schwingbewegung nach einem Teilkreis aus, dessen Mitte durch die Drehachse des unteren Hebels (4), also den Bolzen (8) bestimmt ist, und die Drehachse des in Schwingbewegung versetzten Armes (5) sich in einer Öffnung (9) befindet, an der Stelle der Verbindung des Armes (5) mit dem Haken-Modul (6), und das Haken-Modul (6), der Arm (5) und der untere Hebel (4) - die einen Exzentermechanismus formen - bilden insgesamt das Sicherungsschloss.

2. Die Mittelrunge für Sattelauflieger nach Anspruch 1, **dadurch gekennzeichnet, dass** die Länge des Armes (5) verstellbar ist.

3. Die Mittelrunge für Sattelauflieger nach Anspruch 1 oder 2, **dadurch gekennzeichnet, dass** das Haken-Modul (6) eine entsprechend geformte, abgerundete Flachstange, die zwei abgerundete Abzweigungen aufweist, und in deren Mitte sich die Öffnung (9) und eine Durchbohrung (10) befinden.

4. Die Mittelrunge für Sattelauflieger nach Anspruch 3, **dadurch gekennzeichnet, dass** die Durchbohrung (10) eine Verbindungsstelle zwischen dem Haken-Modul (6) und der Mittelrunge (1) ist, auch mittels einem senkrecht platziertem Bolzen realisiert.

5. Die Mittelrunge für Sattelauflieger nach Anspruch 3, oder 4, **dadurch gekennzeichnet, dass** eine der Abzweigungen der Flachstange, also des Haken-Moduls (6) einen Halter aufweist (11).

6. Die Mittelrunge für Sattelauflieger nach einem der Ansprüche 3 - 5, **dadurch gekennzeichnet, dass** sich die Drehachse des Haken-Moduls (6) genau in der Mitte der Durchbohrung (10) befindet.

7. Die Mittelrunge für Sattelauflieger nach einem der Ansprüche 1 - 6, **dadurch gekennzeichnet, dass** es an der Mittelrunge (1) mehr als ein Sicherheitsschloss, vorteilhaft zwei Sicherheitsschlösser gibt.

8. Die Mittelrunge für Sattelauflieger nach einem der Ansprüche 1-7, **dadurch gekennzeichnet, dass** an der Mittelrunge, in dessen oberen Teil ein Heber (12) befestigt ist, an dem gelenkartig eine Stange (13) angebracht ist, wobei die Verbindung des Hebers (12) mit der Mittelrunge (1) und mit der Stange (13) separat ist, und die Stange (13) verfügt über einen Riegel (14), der das obere Teil des Mittelrunge (1) blockiert und über den Dachbinder des Sattelaufliegers geschoben wird, wobei in der Lage, wo sich der Heber (12) senkrecht zur Mittelrunge (1) befindet - ist das obere Teil des Mittelrunge (1) ungesichert und entriegelt.

9. Die Mittelrunge für Sattelauflieger nach Anspruch 8, **dadurch gekennzeichnet, dass** die Stange (13) in der Länge verstellbar ist.

## Claims

1. A middle stanchion for a semi-trailer, which is placed in a pocket (2) formed on a side wall (3), wherein in the lower part of the middle stanchion (1) there is a safety lock consisting of a lower lever (4) and an arm (5), **characterized in that** it comprises a safety hook module (6) which can be locked to a pin (7), the arm (5) being attached to the hook module (6) in a hinged manner - thus, that in this way a rotational movement of the hook module (6) is possible, and on the other side for the modular hook mounting (6) the arm (5) is rotatably mounted on the lower lever (4), and the lower lever (4) is attached to the middle stanchion (1) by means of a (8) which determines the axis of rotation of the lever (4), thereby the axis is displaced relative to the attachment of the arm (5) to the lever (4), whereby after operation and lifting of the lower lever (4), it performs an oscillating movement according to a pitch circle, which centre is determined by the axis of rotation of the lower lever (4), i.e. the pin (8), and the axis of rotation of the oscillating arm (5) located in an opening (9) at the point of connection of the arm (5) to the hook module (6), and the hook module (6), the arm (5) and the lower lever (4) - forming an eccentric mechanism - together form the safety lock.

2. The middle stanchion for semi-trailer according to claim 1, **wherein** the length of the arm (5) is adjustable.

3. The middle stanchion for semi-trailer according to claim 1 or 2, **wherein** the hook module (6) comprises a correspondingly shaped, rounded flat bar, which has two rounded branches and in the centre of which the opening (9) and a through-bore (10) are located.

4. The middle stanchion for semi-trailer according to claim 3, **wherein** the through-bore (10) is a connecting point between the hook module (6) and the middle stanchion (1), also realized by means of a vertically placed bolt.

5. The middle stanchion for semi-trailer according to claim 3 or 4, **wherein** one of the branches of the flat bar, i.e. the hook module (6), comprises a holder (11).

6. The middle stanchion for semi-trailers according to one of claims 3 - 5, **wherein** the axis of rotation of the hook module (6) is located exactly in the centre of the through-bore (10).

7. The middle stanchion for semi-trailers according to one of the claims 1 - 6, **wherein** there is more than one safety lock on the middle stanchion (1), advantageously two safety locks.

8. The middle stanchion for semi-trailer according to one of the claims 1-7, **wherein** on the middle stanchion, in the upper part of which a lifter (12) is fixed, on which a rod (13) is attached in a hinged manner, the connection of the lifter (12) to the middle stanchion (1) and to the rod (13) being separate, and the bar (13) has a latch (14) which blocks the upper part of the middle stanchion (1) and is pushed over the roof truss of the semi-trailer, whereby in the position where the lifter (12) is perpendicular to the middle stanchion (1) - the upper part of the middle stanchion (1) is unsecured and unlocked.

9. The middle stanchion for semi-trailer according to claim 8, **wherein** the rod (13) is adjustable in length.

## Revendications

1. Un pilier central pour une semi-remorque, qui est placé dans une poche (2) formée sur une paroi latérale (3), où dans la partie inférieure du piliercentral (1) se trouve un verrou de sécurité composé d'un levier inférieur (4) et d'un bras (5), **caractérisé en ce qu'**il comprend un module de crochet de sécurité (6) qui peut être verrouillé sur un goupille (7), le bras (5) étant fixé au module de crochet (6) de manière articulée - ainsi, de cette manière, un mouvement de rotation du module de crochet (6) est possible, et de l'autre côté pour le montage en crochet modulaire (6) le bras (5) est monté à rotation sur le levier inférieur (4), et le levier inférieur (4) est fixé au pilier central (1) au moyen d'une boulon (8) qui détermine l'axe de rotation du levier (4), ainsi, l'axe est déplacé par rapport à la fixation du bras (5) au levier (4), tandis que après actionnement et levage du levier inférieur (4), il effectue un mouvement oscillant selon un cercle primitif, lequel centre est déterminé par l'axe de rotation du levier inférieur (4), c'est-à-dire la boulon (8), et l'axe de rotation du bras oscillant (5) est situé dans une ouverture (9) au point de raccordement du bras (5) au module de crochet (6), et le module de crochet (6), le bras (5) et le levier inférieur (4) - formant un mécanisme excentrique - forment ensemble le verrou de sécurité.

2. Le pilier central pour une semi-remorque selon la revendication 1, **caractérisé en ce que** la longueur du bras (5) est réglable.

3. Le pilier central pour une semi-remorque selon la revendication 1 ou 2, **caractérisé en ce que** le module de crochet (6) comprend une barre plate arrondie, de forme correspondante, qui a deux branches arrondies et au centre de laquelle se trouvent l'ouverture (9) et un alésage traversant (10).

4. Le pilier central pour une semi-remorque selon la revendication 3, **caractérisé en ce que** le alésage traversant (10) est un point de raccordement entre le module de crochet (6) et le piliercentral (1), également réalisé au moyen d'un boulon placé verticalement.

5. Le pilier central pour une semi-remorque selon la revendication 3 ou 4, **caractérisé en ce que** l'une des branches de la barre plate, c'est-à-dire le module de crochet (6), comprend un support (11).

6. Le pilier central pour une semi-remorque selon l'une des revendications 3 à 5, **caractérisé en ce que** l'axe de rotation du module de crochet (6) est situé exactement au centre du alésage traversant (10).

7. Le pilier central pour une semi-remorque selon l'une des revendications 1 à 6, **caractérisé en ce qu'**il y a plus d'un verrou de sécurité sur le pilier central (1), avantageusement deux verrous de sécurité.

8. Le pilier central pour une semi-remorque selon l'une des revendications 1 à 7, **caractérisé en ce que** sur le pilier central, dans la partie supérieure duquel est fixé un élévateur (12), sur lequel une tige (13) est fixée de manière articulée, le raccordement de l'élévateur (12) au piliercentral (1) et à la tige (13) étant séparé, et la barre (13) dispose de'un loquet (14) qui bloque la partie supérieure du pilier central (1) et est poussé sur le ferme de toit de la semi-remorque, tandis que dans la position où l'élévateur (12) est perpendiculaire au piliercentral (1) - la partie supérieure du piliercentral (1) n'est pas sécurisée et déverrouillée.

9. Le pilier central pour une semi-remorque selon la revendication 8, **caractérisé en ce que** la tige (13) est réglable en longueur.
